# EUROPEAN PATENT APPLICATION

(11) **EP 4 776 024 A1**
(43) Date of publication of application: **15.07.2026**
(21) Application number: 26150509.3
(22) Date of filing: 07.01.2026
(51) Int. Cl.: G01S 7/481

(54) **EMISSION MODULE AND LIDAR**

(30) Priority: 08.01.2025 CN 202510034309
(71) Applicant: Suteng Innovation Technology Co., Ltd, Shenzhen City Guangdong 518000 (CN)
(72) Inventor: LIANG, Ying, Shenzhen City (CN)
(74) Representative: Ran, Handong

(57) **Abstract**

An emission module (1) includes a carrier board (11) and a light-emitting module (12) having a first subgroup (12A) and a second subgroup (12B). The first subgroup comprises at least two first emission units (121), at least one first drive unit (122), and at least one first energy storage unit (123). The first drive unit drives the at least two first emission units to emit laser light using energy stored in the first energy storage unit. The second subgroup comprises at least two second emission units (124), at least one second drive unit (125), and at least one second energy storage unit (126). The second drive unit drives the at least two second emission units to emit laser light using energy stored in the second energy storage unit. The first emission units and the second emission units are arranged in a staggered manner along a second direction. A single drive unit concurrently drives multiple emission units, compressing the light-emitting module's volume.

## Description

### TECHNICAL FIELD

The present application relates to the technical field of LiDAR, and particularly to an emission module and a LiDAR.

### BACKGROUND

A LiDAR is provided with an emission module and a reception module. By emitting laser signals through the emission module and receiving them via the reception module, detection of parameter information such as distance and speed of a target object is achieved.

However, emission modules in related technologies typically use discrete components, resulting in a large overall volume of the emission module, which is not conducive to the compression of the overall radar size and the development of miniaturization.

### SUMMARY

Embodiments of the present application provide an emission module and a LiDAR, aiming to improve the issue in related technologies where emission modules use discrete components, resulting in a large overall volume of the emission module, which is not conducive to the compression of the overall radar size and the development of miniaturization.

In a first aspect, an embodiment of the present application provides an emission module. The emission module comprises a carrier board and a light-emitting module. The light-emitting module comprises a first subgroup and a second subgroup. The first subgroup comprises at least two first emission units, at least one first drive unit, and at least one first energy storage unit. The at least two first emission units are arranged on the carrier board sequentially along a first direction. The first drive unit is configured to drive the at least two first emission units of the first subgroup to emit laser light using energy stored in the first energy storage unit. The second subgroup comprises at least two second emission units, at least one second drive unit, and at least one second energy storage unit. The at least two second emission units are arranged on the carrier board sequentially along the first direction. The second drive unit is configured to drive the at least two second emission units of the second subgroup to emit laser light using energy stored in the second energy storage unit. The first emission units and the second emission units are arranged in a staggered manner along a second direction, and the second direction intersects with the first direction.

In the above technical solution, both the first subgroup and the second subgroup of the present application integrate the energy conversion step and the emission step. Compared with the related technologies using separate emission and energy conversion devices, the present application reduces the volume of the light-emitting module. Moreover, the first drive unit and the second drive unit of the present application can be understood as each integrating multiple drive devices, so as to drive at least two first emission units to emit laser light through one integrated first drive unit, and to drive at least two second emission units to emit laser light through one integrated second drive unit. That is, the present application can simultaneously drive at least two emission units to emit laser light through one drive unit, thereby further compressing the volume of the light-emitting module, increasing the point cloud density of the LiDAR, and ensuring the vertical resolution of the LiDAR. Secondly, compared with a multi-row, multi-column emission matrix in related technologies, the first emission units in the first subgroup and the second emission units in the second subgroup of the present application are arranged in a staggered manner along the second direction, occupying less space on the carrier board, thereby further compressing the volume of the light-emitting module, making the emission module conducive to the compression of the overall radar size and the development of miniaturization.

In combination with the first aspect, in some possible implementations, each first emission unit comprises at least one first light-emitting area; each second emission unit comprises at least one second light-emitting area.

In combination with the first aspect, in some possible implementations, the first drive unit, the first energy storage unit, the first emission units, the second emission units, the second energy storage unit, and the second drive unit are arranged sequentially along the second direction on a same side of the carrier board.

In combination with the first aspect, in some possible implementations, the first drive unit, the first energy storage unit, the first emission units, the second emission units, the second energy storage unit, and the second drive unit are mounted on the carrier board using surface-mount technology.

In combination with the first aspect, in some possible implementations, the first drive unit, the first emission units, the second emission units, and the second drive unit are arranged sequentially along the second direction on a same side of the carrier board. The first energy storage unit is embedded inside the carrier board opposite to the first drive unit, and the second energy storage unit is embedded inside the carrier board opposite to the second drive unit.

In combination with the first aspect, in some possible implementations, the carrier board comprises a first surface and a second surface opposite to each other. The first drive unit, the first emission units, the second emission units, and the second drive unit are arranged sequentially along the second direction on the first surface of the carrier board. The first energy storage unit is disposed on the second surface of the carrier board opposite to the first drive unit, and the second energy storage unit is disposed on the second surface of the carrier board opposite to the second drive unit.

In combination with the first aspect, in some possible implementations, the carrier board comprises a first surface and a second surface opposite to each other. The first drive unit, the first emission units, the second emission units, and the second drive unit are arranged sequentially along the second direction on the first surface of the carrier board. The first energy storage unit is disposed on the second surface of the carrier board and at least partially overlaps with an orthographic projection of the first drive unit, and the second energy storage unit is disposed on the second surface of the carrier board and at least partially overlaps with an orthographic projection of the second drive unit.

In combination with the first aspect, in some possible implementations, each first emission unit is connected to at least two first drive units; and/or, each second emission unit is connected to at least two second drive units.

In combination with the first aspect, in some possible implementations, each first drive unit is configured to drive two adjacent first emission units within the first subgroup to emit laser light using energy stored in the first energy storage unit; and/or, each second drive unit is configured to drive two adjacent second emission units within the second subgroup to emit laser light using energy stored in the second energy storage unit.

In a second aspect, an embodiment of the present application provides a LiDAR, comprising the emission module according to any optional implementation of the first aspect and a reception module. The emission module is configured to emit laser light. The reception module is configured to receive echo signals corresponding to the laser light.

### BRIEF DESCRIPTION OF DRAWINGS

In order to illustrate the technical solutions in the embodiments of the present application or the prior art more clearly, the following briefly introduces the accompanying drawings required for describing the embodiments or the prior art. Obviously, the accompanying drawings in the following description show only some embodiments of the present application, and a person of ordinary skill in the art can obtain other accompanying drawings based on these drawings without creative efforts.
FIG. 1 is a schematic block diagram of a LiDAR according to an embodiment of the present application;
FIG. 2 is a schematic block diagram of an emission module according to an embodiment of the present application;
FIG. 3 is a schematic top-view block diagram of an emission module according to an embodiment of the present application;
FIG. 4 is a schematic top-view block diagram of another emission module according to an embodiment of the present application;
FIG. 5 is a schematic top-view block diagram of yet another emission module according to an embodiment of the present application;
FIG. 6 is a schematic block diagram of a light-emitting module according to an embodiment of the present application;
FIG. 7 is a schematic block diagram of another light-emitting module according to an embodiment of the present application;
FIG. 8 is a schematic top-view block diagram of still another emission module according to an embodiment of the present application;
FIG. 9 is a schematic block diagram of yet another light-emitting module according to an embodiment of the present application;
FIG. 10 is a schematic side-view block diagram of an emission module according to an embodiment of the present application;
FIG. 11 is a schematic side-view block diagram of another emission module according to an embodiment of the present application;
FIG. 12 is a schematic side-view block diagram of yet another emission module according to an embodiment of the present application.

### Reference Signs:

10, LiDAR; 1, emission module; 11, carrier board; 11A, first surface; 11B, second surface; 12, light-emitting module; 12A, first subgroup; 12Aa, first emission subgroup; 12Ab, second emission subgroup; 12Ac, third emission subgroup; 12B, second subgroup; 12Ba, fourth emission subgroup; 12Bb, fifth emission subgroup; 12Bc, sixth emission subgroup; 121, first emission unit; 122, first drive unit; 123, first energy storage unit; 124, second emission unit; 125, second drive unit; 126, second energy storage unit; 2, reception module; AA, first direction; BB, second direction.

### DETAILED DESCRIPTION

Embodiments of the present application provide an emission module and a LiDAR, aiming to improve the issue in related technologies where emission modules use discrete components, resulting in a large overall volume of the emission module, which is not conducive to the compression of the overall radar size and the development of miniaturization.

In a first aspect, an embodiment of the present application provides an emission module. The emission module comprises a carrier board and a light-emitting module. The light-emitting module comprises a first subgroup and a second subgroup. The first subgroup comprises at least two first emission units, at least one first drive unit, and at least one first energy storage unit. The at least two first emission units are arranged on the carrier board sequentially along a first direction. The first drive unit is configured to drive the at least two first emission units of the first subgroup to emit laser light using energy stored in the first energy storage unit. The second subgroup comprises at least two second emission units, at least one second drive unit, and at least one second energy storage unit. The at least two second emission units are arranged on the carrier board sequentially along the first direction. The second drive unit is configured to drive the at least two second emission units of the second subgroup to emit laser light using energy stored in the second energy storage unit. The first emission units and the second emission units are arranged in a staggered manner along a second direction, and the second direction intersects with the first direction.

In the above technical solution, both the first subgroup and the second subgroup of the present application integrate the energy conversion step and the emission step. Compared with the related technologies using separate emission and energy conversion devices, the present application reduces the volume of the light-emitting module. Moreover, the first drive unit and the second drive unit of the present application can be understood as each integrating multiple drive devices, so as to drive at least two first emission units to emit laser light through one integrated first drive unit, and to drive at least two second emission units to emit laser light through one integrated second drive unit. That is, the present application can simultaneously drive at least two emission units to emit laser light through one drive unit, thereby further compressing the volume of the light-emitting module, increasing the point cloud density of the LiDAR, and ensuring the vertical resolution of the LiDAR. Secondly, compared with a multi-row, multi-column emission matrix in related technologies, the first emission units in the first subgroup and the second emission units in the second subgroup of the present application are arranged in a staggered manner along the second direction, occupying less space on the carrier board, thereby further compressing the volume of the light-emitting module, making the emission module conducive to the compression of the overall radar size and the development of miniaturization.

In combination with the first aspect, in some possible implementations, each first emission unit comprises at least one first light-emitting area; each second emission unit comprises at least one second light-emitting area.

In combination with the first aspect, in some possible implementations, the first drive unit, the first energy storage unit, the first emission units, the second emission units, the second energy storage unit, and the second drive unit are arranged sequentially along the second direction on a same side of the carrier board.

In combination with the first aspect, in some possible implementations, the first drive unit, the first energy storage unit, the first emission units, the second emission units, the second energy storage unit, and the second drive unit are mounted on the carrier board using surface-mount technology.

In combination with the first aspect, in some possible implementations, the first drive unit, the first emission units, the second emission units, and the second drive unit are arranged sequentially along the second direction on a same side of the carrier board. The first energy storage unit is embedded inside the carrier board opposite to the first drive unit, and the second energy storage unit is embedded inside the carrier board opposite to the second drive unit.

In combination with the first aspect, in some possible implementations, the carrier board comprises a first surface and a second surface opposite to each other. The first drive unit, the first emission units, the second emission units, and the second drive unit are arranged sequentially along the second direction on the first surface of the carrier board. The first energy storage unit is disposed on the second surface of the carrier board opposite to the first drive unit, and the second energy storage unit is disposed on the second surface of the carrier board opposite to the second drive unit.

In combination with the first aspect, in some possible implementations, the carrier board comprises a first surface and a second surface opposite to each other. The first drive unit, the first emission units, the second emission units, and the second drive unit are arranged sequentially along the second direction on the first surface of the carrier board. The first energy storage unit is disposed on the second surface of the carrier board and at least partially overlaps with an orthographic projection of the first drive unit, and the second energy storage unit is disposed on the second surface of the carrier board and at least partially overlaps with an orthographic projection of the second drive unit.

In combination with the first aspect, in some possible implementations, each first emission unit is connected to at least two first drive units; and/or, each second emission unit is connected to at least two second drive units.

In combination with the first aspect, in some possible implementations, each first drive unit is configured to drive two adjacent first emission units within the first subgroup to emit laser light using energy stored in the first energy storage unit; and/or, each second drive unit is configured to drive two adjacent second emission units within the second subgroup to emit laser light using energy stored in the second energy storage unit.

In a second aspect, an embodiment of the present application provides a LiDAR, comprising the emission module according to any optional implementation of the first aspect and a reception module. The emission module is configured to emit laser light. The reception module is configured to receive echo signals corresponding to the laser light.

In order to make the objectives, technical solutions, and advantages of the present application clearer, embodiments of the present application will be described in further detail below with reference to the accompanying drawings.

When the following description involves the accompanying drawings, unless otherwise indicated, the same numerals in different drawings represent the same or similar elements. The implementation manners described in the following exemplary embodiments do not represent all implementation manners consistent with the present application. On the contrary, they are merely examples of apparatuses and methods consistent with some aspects of the present application as detailed in the appended embodiments.

In the description of the present application, it should be understood that terms such as "first" and "second" are used for descriptive purposes only and should not be construed as indicating or implying relative importance. For those of ordinary skill in the art, the specific meanings of the above terms in the present application can be understood based on the specific context. Furthermore, in the description of the present application, unless otherwise specified, "a plurality" means two or more. "And/or" describes the association relationship of associated objects, indicating that three relationships may exist. For example, A and/or B may indicate: existence of A alone, simultaneous existence of A and B, and existence of B alone. The character "/" generally indicates that the associated objects are in an "or" relationship.

Unless otherwise defined, all technical and scientific terms used herein have the same meanings as commonly understood by one of ordinary skill in the art to which the present application belongs. The terms used in the description herein are for the purpose of describing specific embodiments only and are not intended to limit the present application. The term "and/or" used herein includes any and all combinations of one or more of the associated listed items.

Before introducing the embodiments of the present application, the following explains professional terms that may be involved in the embodiments of the present application.

LiDAR: A radar system that emits laser beams to detect target characteristics such as position and speed. Its working principle is to emit detection signals (laser beams) towards a target object, and then compare the received echo signals reflected from the target object with the detection signals (or local oscillator signals). After appropriate processing, information about the target object relative to the LiDAR, such as distance, azimuth, altitude, speed, attitude, and even shape parameters, can be obtained.

As a depth sensor, LiDAR is widely used in various fields, such as vehicle perception, robot perception, and smart city perception. LiDAR usually comprises an emission module and a detection module. The emission module is used to emit detection signals towards a target object, and the detection module is used to receive echo signals reflected from the target object. By measuring the flight time of light pulses between the radar and the target, as well as the intensity and morphology of the reflected echoes, information can be obtained regarding whether an object is present in the target direction, the distance from the object to the radar, and the surface reflectivity of the object.

Currently, the emission modules of some LiDARs basically use discrete components. For example, each step from energy conversion to emission is separate, meaning each step is an independent module, and then the emission drivers and light-emitting devices are arranged in a transceiver combination. As a result, the overall volume of the emission module is large, which is not conducive to the compression of the overall radar size and the development of miniaturization.

In order to reduce the size of the emission module, some LiDARs in related technologies use integrated drivers to arrange and combine light-emitting modules. For example, emission drivers and light-emitting devices are installed on a circuit board according to a specific geometric layout to form a two-dimensional matrix. Although such arrangement reduces the size of the emission module, it is still aimed at serial emission for multiple analysis zones and is not suitable for systems requiring rapid emission by multiple channels within an extremely short time period. Here, the system refers to one where, within one ranging analysis zone, all channels perform one emission (which can be serial or parallel emission, and the number of parallel and serial emission channels is not limited) to achieve rapid emission within an extremely short time period. The emission modules in related technologies are not suitable for such systems.

Therefore, embodiments of the present application provide an emission module and a LiDAR. The emission module integrates energy conversion and emission together, and one drive unit can simultaneously drive at least two emission units to emit laser light, thereby compressing the volume of the light-emitting module, which is conducive to the compression of the overall radar size and the development of miniaturization.

The emission module and LiDAR provided by the present application are exemplarily introduced below with reference to the accompanying drawings.

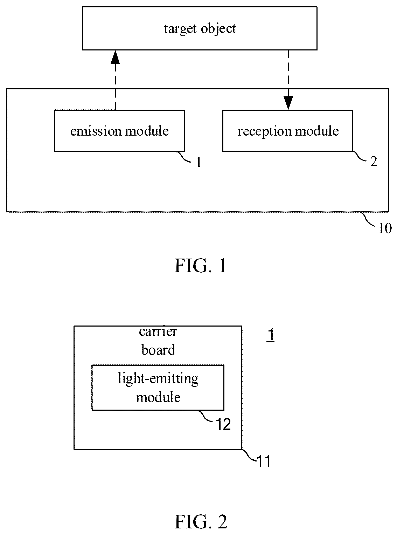

As shown in FIG. 1, the LiDAR 10 provided by an embodiment of the present application comprises an emission module 1 and a reception module 2. The emission module 1 is configured to emit laser light to detect a target object. The reception module 2 is configured to receive echo signals reflected from the target object and process them to obtain corresponding distance information.

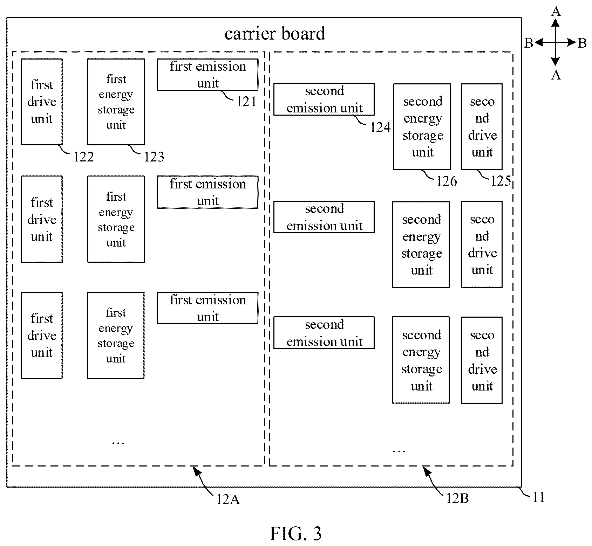

In one example, please refer to FIG. 2 and FIG. 3. The emission module 1 provided by the present application comprises a carrier board 11 and a light-emitting module 12. The light-emitting module 12 is disposed on the carrier board 11. The light-emitting module 12 comprises a first subgroup 12A and a second subgroup 12B. The first subgroup 12A comprises at least one first emission unit 121, at least one first drive unit 122, and at least one first energy storage unit 123. The at least one first emission unit 121 is arranged on the carrier board 11 sequentially along a first direction AA. The second subgroup 12B comprises at least one second emission unit 124, at least one second drive unit 125, and at least one second energy storage unit 126. The at least one second emission unit 124 is arranged on the carrier board 11 sequentially along the first direction AA. By integrating the first drive unit 122 and the second drive unit 125, the present application reduces the volume of the emission devices compared to the multiple discrete emission and energy conversion devices in the prior art. At the same time, by arranging the first emission units and the second emission units adjacent to each other along the first direction AA and staggered along a second direction BB, the space occupied on the carrier board is further reduced under the same layout density. Secondly, the staggered arrangement of the first emission units 121 and the second emission units 124 also allows sufficient space around each emission unit for heat dissipation, thereby reducing heat conduction between adjacent emission units and avoiding local overheating.

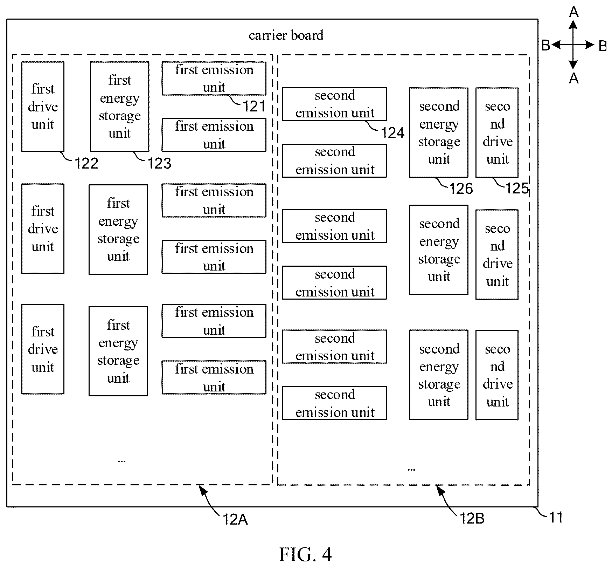

In one example, please refer to FIG. 2 and FIG. 4. The emission module 1 provided by the present application comprises a carrier board 11 and a light-emitting module 12. The light-emitting module 12 is disposed on the carrier board 11. The light-emitting module 12 comprises a first subgroup 12A and a second subgroup 12B. The first subgroup 12A comprises at least two first emission units 121, at least one first drive unit 122, and at least one first energy storage unit 123. The at least two first emission units 121 are arranged on the carrier board 11 sequentially along a first direction AA. The second subgroup 12B comprises at least two second emission units 124, at least one second drive unit 125, and at least one second energy storage unit 126. The at least two second emission units 124 are arranged on the carrier board 11 sequentially along the first direction AA.

In this example, the first drive unit 122 is configured to drive the at least two first emission units 121 of the first subgroup 12A to emit laser light using energy stored in the first energy storage unit 123. That is, the energy conversion step and the emission step within the first subgroup 12A are integrated. Moreover, the first drive unit 122 can drive at least two first emission units 121 to emit laser light. The second drive unit 125 is configured to drive the at least two second emission units 124 of the second subgroup 12B to emit laser light using energy stored in the second energy storage unit 126. That is, the energy conversion step and the emission step within the second subgroup 12B are integrated, and the second drive unit 125 can drive at least two second emission units 124 to emit laser light.

Thus, both the first subgroup 12A and the second subgroup 12B of the present application integrate the energy conversion step and the emission step. Compared with the related technologies using discrete emission and energy conversion devices, the present application reduces the volume of the light-emitting module 12. Moreover, the first drive unit 122 and the second drive unit 125 of the present application can be understood as drive modules that respectively integrate multiple circuit devices, so as to drive at least two first emission units 121 to emit laser light through one integrated first drive unit 122, and to drive at least two second emission units 124 to emit laser light through one integrated second drive unit 125. That is, the present application can simultaneously drive at least two emission units to emit laser light through one drive unit. For the emission module 1, reusing the same drive unit to drive multiple emission units further compresses the volume of the light-emitting module 12, making the emission module 1 conducive to the compression of the overall radar size and the development of miniaturization. Compressing the volume of the light-emitting module 12 can make the entire LiDAR 10 more compact, meaning more emission units (i.e., the first emission units 121 and the second emission units 124) can be accommodated in the same space. This allows more emission channels to be deployed in the same scanning area, thereby increasing the point cloud density and emission capability density of the LiDAR 10, ensuring the vertical resolution of the LiDAR 10, and providing possibilities for high-density, long-distance ranging.

To further reduce the volume of the emission module 1, in one example, as shown in FIG. 4, the first emission units 121 within the first subgroup 12A and the second emission units 124 within the second subgroup 12B are arranged in a staggered manner along a second direction BB, and the second direction BB intersects with the first direction AA. As an example, the first direction AA is the vertical direction, and the second direction BB is the horizontal direction. As another example, the first direction AA can also be the horizontal direction, and the second direction BB can be the vertical direction. The at least two first emission units 121 are arranged on the carrier board 11 sequentially along the vertical direction, and the at least two second emission units 124 are arranged on the carrier board 11 sequentially along the vertical direction. In this case, along the vertical direction, the first emission units 121 within the first subgroup 12A and the second emission units 124 within the second subgroup 12B are adjacent to each other, and along the horizontal direction, adjacent first emission units 121 and second emission units 124 within the second subgroup 12B are arranged in a staggered manner. It can be understood that the at least two first emission units 121 within the first subgroup 12A and the at least two second emission units 124 within the second subgroup 12B form two columns of emission units, and these two columns are arranged in a staggered manner.

In this example, compared with a multi-row, multi-column emission matrix in related technologies, the first emission units 121 within the first subgroup 12A and the second emission units 124 within the second subgroup 12B of the present application are arranged in a staggered manner along the second direction BB. This can achieve a smaller occupied space on the carrier board 11 under the same layout density in the first direction AA, thereby further compressing the volume of the light-emitting module 12. Moreover, the staggered arrangement of the first emission units 121 and the second emission units 124 along the second direction BB can better utilize the limited space, making the entire system more compact while maintaining sufficient spacing. Secondly, staggering the first emission units 121 and the second emission units 124 also allows sufficient space around each emission unit for heat dissipation, thereby reducing heat conduction between adjacent emission units and avoiding local overheating.

It can be understood that, when viewed from a projection along the first direction AA, the staggered first emission units 121 and second emission units 124 appear as left-right spliced lines in the projection, thereby reducing the gaps between the first emission units 121 and the second emission units 124 in the first direction AA (i.e., the vertical direction). This compresses the volume of the light-emitting module 12, thereby compressing the volume of the emission module 1, making the emission module 1 conducive to the compression of the overall radar size and the development of miniaturization.

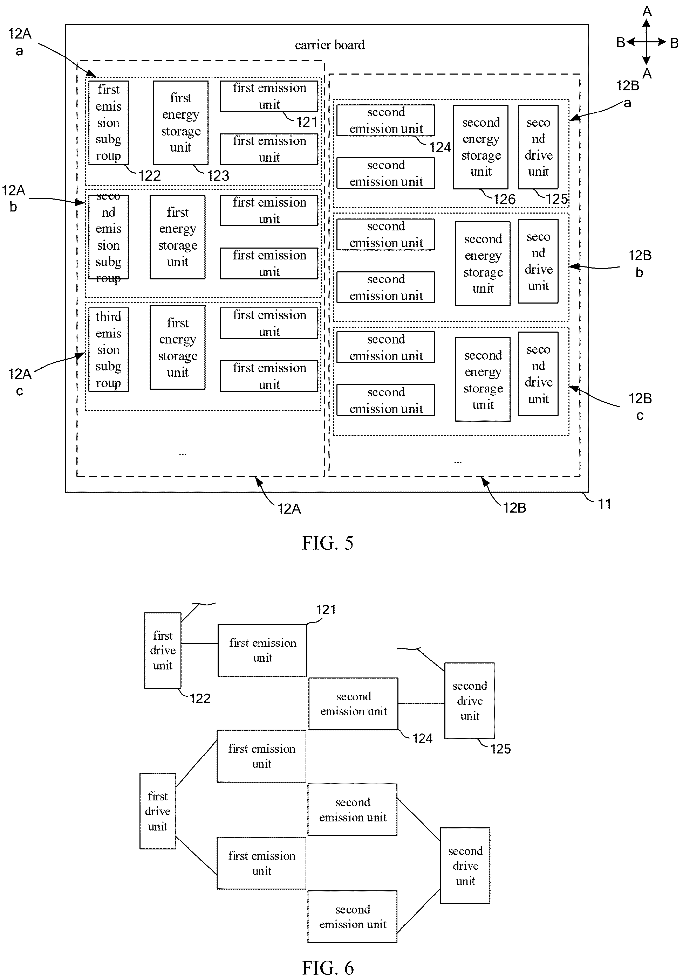

The emission module 1 provided by the present application can comprise a plurality of emission subgroups. Each first emission unit 121 comprises at least one first light-emitting area, and each second emission unit 124 comprises at least one second light-emitting area. Exemplarily, taking that each first emission unit 121 has one first light-emitting area as an example, as shown in FIG. 5, the first subgroup 12A can be formed to have three first emission subgroups, namely a first emission subgroup 12Aa, a second emission subgroup 12Ab, and a third emission subgroup 12Ac, which are arranged sequentially along the first direction AA. Each of the first emission subgroup 12Aa, the second emission subgroup 12Ab, and the third emission subgroup 12Ac corresponds to one first drive unit 122, one first energy storage unit 123, and two first emission units 121, wherein each first emission unit 121 corresponds to one first light-emitting area. In this example, the first emission subgroup 12Aa, the second emission subgroup 12Ab, and the third emission subgroup 12Ac do not interfere with each other. When the two first light-emitting areas in the first emission subgroup 12Aa need to emit laser light, the first drive unit 122 within the first emission subgroup 12Aa drives the corresponding two first emission units 121 in that subgroup to emit laser light using energy stored in the first energy storage unit 123, causing the two first light-emitting areas corresponding to the two first emission units 121 to emit laser light. The same principle applies when the second emission subgroup 12Ab or the third emission subgroup 12Ac needs to emit laser light. Moreover, the first drive unit 122 and the first energy storage unit 123 in the first emission subgroup 12Aa, the second emission subgroup 12Ab, and the third emission subgroup 12Ac of the present application can be independently driven and store energy to achieve parallel emission of the first emission subgroup 12Aa, the second emission subgroup 12Ab, and the third emission subgroup 12Ac.

In this example, the number of channels of the first drive unit 122 can be set correspondingly according to the number of first emission units 121. For example, the number of channels of the first drive unit 122 is set as shown in FIG. 6. In this case, the first drive unit 122 is provided with two corresponding channels. One of the channels is correspondingly connected to one of the two first emission units 121 in one emission subgroup (i.e., one emission unit is provided with one electrical connection point for connection, wherein the first drive unit 122 is connected to the electrical connection point of the first emission unit via one energy storage unit 123), and the remaining channel is correspondingly connected to the other one of the two first emission units 121 in that emission subgroup, so that the first drive unit 122 can drive the corresponding two first emission units 121 in that emission subgroup to emit laser light using energy stored in the first energy storage unit 123, thereby causing the two first light-emitting areas corresponding to the two first emission units 121 to emit laser light. It can be understood that each channel comprises one energy storage unit, and the drive unit adjusts the emission parameters of the emission unit by adjusting the charging time of the energy storage unit.

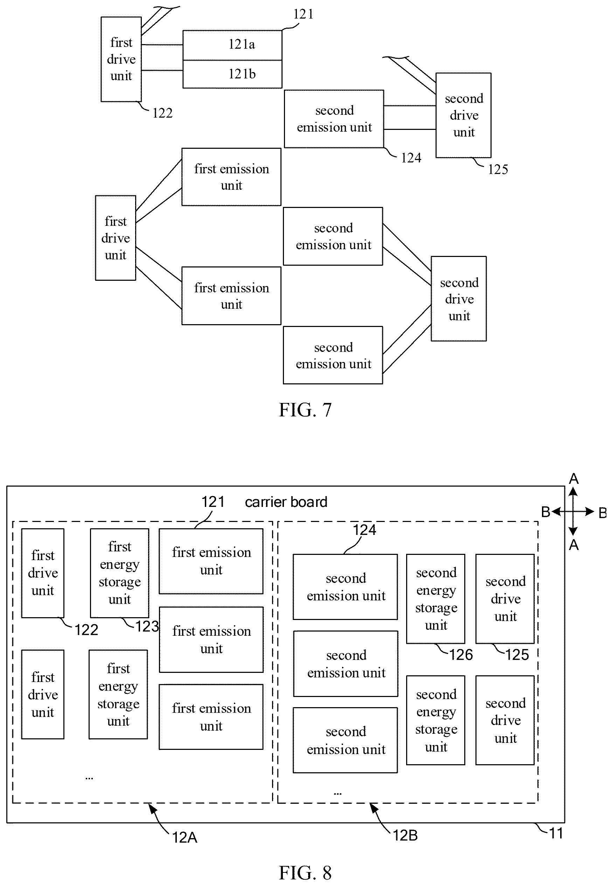

As another example, the number of channels of the first drive unit 122 can also be set correspondingly according to the number of first light-emitting areas in the first emission unit 121. For example, when each first emission unit 121 is provided with only two first light-emitting areas, the number of channels of the first drive unit 122 is set as shown in FIG. 7. In this case, the first drive unit 122 is provided with four corresponding channels. Two of the channels are connected to the two first light-emitting areas (121a, 121b) within one of the two first emission units 121 in an emission subgroup, and the remaining two channels are connected to the two first light-emitting areas within the other one of the two first emission units 121 in that emission subgroup, so that the first drive unit 122 can drive the corresponding two first emission units 121 in that subgroup to emit laser light using energy stored in the first energy storage unit 123, thereby causing the four first light-emitting areas corresponding to the two first emission units 121 to emit laser light.

It can be understood that the number of channels corresponding to a drive unit is related to the detection requirements of the radar and the number of emission subgroups corresponding to that drive unit. Specifically, when the detection requirements of the radar are high and it is necessary to reduce crosstalk between parallel channels, i.e., each channel needs to be independently controlled, the number of channels corresponding to the drive unit can be controlled to correspond one-to-one with the emission sub-areas of the emission units corresponding to that drive unit (i.e., each emission sub-area corresponds to one drive channel, meaning each emission sub-area is electrically connected to the drive unit via one energy storage unit). By setting each emission sub-area to correspond to one emission channel, each emission sub-area can be independently controlled, improving the flexibility of system control. It can also be combined with emission coding to control each emission sub-area to emit according to the coding, thereby enhancing the anti-interference performance between each emission channel. As another example, the number of channels corresponding to a drive unit can also be less than the number of emission sub-areas of the emission units corresponding to that drive unit and greater than or equal to the number of emission units. That is, the number of emission channels of the drive unit can be set according to the detection requirements of the detection field of view corresponding to different emission units or different emission subgroups. For example, for the target detection field of view of the radar (e.g., the central detection field of view), each emission sub-area can correspond to one emission channel, while for the edge field of view, one emission unit can correspond to one emission channel (wherein each emission unit can comprise multiple emission sub-areas). For another example, for the edge field of view of the radar, every two emission sub-areas can correspond to one emission channel, while for the central detection field of view, each emission sub-area can correspond to one emission channel.

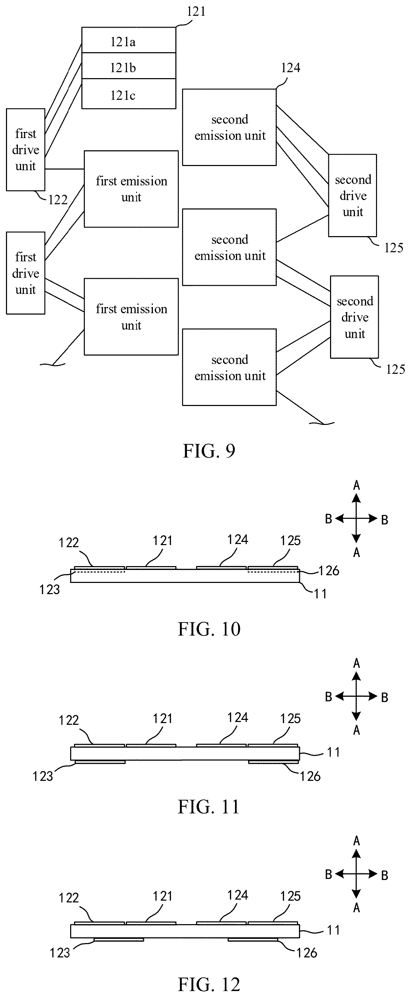

When a first emission unit 121 is provided with multiple first light-emitting areas, the same first emission unit 121 can also correspond to different emission subgroups. That is, a first emission unit 121 can span two or even more emission subgroups. In this case, each first emission unit 121 can be connected to at least two first drive units 122. When a first emission unit 121 is provided with multiple first light-emitting areas, a part of the first light-emitting areas can be assigned to the Nth emission subgroup and connected to the first drive unit 122 within the Nth emission subgroup, and another part of the first light-emitting areas can be assigned to the (N-1)th emission subgroup and connected to the first drive unit 122 within the (N-1)th emission subgroup. Exemplarily, please refer to FIG. 8 and FIG. 9. When a first emission unit 121 is provided with three first light-emitting areas (e.g., 121a, 121b, 121c), each first drive unit 122 can be provided with four channels. Two of the first light-emitting areas are connected to two of the channels in the first drive unit 122 of the Nth emission subgroup, and the remaining one light-emitting area is connected to one of the channels in the first drive unit 122 of the (N-1)th emission subgroup. The remaining two channels in the first drive unit 122 of the Nth emission subgroup are connected to two first light-emitting areas of another first emission unit 121. The remaining three channels in the first drive unit 122 of the (N-1)th emission subgroup are connected to three first light-emitting areas of other first emission units 121. The same principle applies when a first emission unit 121 is provided with more first light-emitting areas.

The first emission unit 121 provided by the present application can be provided with at least one first light-emitting area. That is, the first emission unit 121 can be a discrete device composed of one first light-emitting area, or it can be an integrated device composed of multiple first light-emitting areas with a common cathode or a common anode. When the first emission unit 121 is an integrated device composed of multiple first light-emitting areas with a common cathode or a common anode, the connection points of the first drive unit 122 and the first energy storage unit 123 are respectively electrically connected to the corresponding non-shared anode or cathode in the corresponding first emission unit 121.

It is worth noting that each light-emitting area needs to have its own independent energy storage unit to ensure the independence and stability of the energy capacity of each light-emitting area. That is, the number of first energy storage units 123 needs to correspond to the number of light-emitting areas. The present application can set a plurality of first energy storage units 123. Each first energy storage unit 123 can be a discrete energy storage capacitor or an integrated device provided with multiple energy storage capacitors. The number of first energy storage units 123 set in the present application or the number of energy storage capacitors in the first energy storage unit 123 can be set according to actual needs. For example, when an emission subgroup is provided with two first emission units 121, and each first emission unit 121 is provided with one first light-emitting area, each first light-emitting area corresponds to one energy storage capacitor cell in the first energy storage unit 123, so that each light-emitting area corresponds to an independent energy storage capacitor, avoiding the problem of mutual influence when multiple light-emitting areas use the same energy storage capacitor. When the number of energy storage capacitors in the first energy storage unit 123 is set to correspond to the number of light-emitting areas, parallel emission of each light-emitting area (i.e., independence of multi-channel concurrent emission) can be achieved, while ensuring consistent emission capability of the corresponding light-emitting areas. When a first emission unit 121 spans two emission subgroups, the energy storage capacitors in the first energy storage unit 123 can correspond to the two first emission units 121 located in the same emission subgroup, for example, corresponding to one or more first light-emitting areas of one of the two first emission units 121 located in the same emission subgroup. Secondly, in the present application, one channel of a first drive unit 122 can correspond to one energy storage capacitor cell in a first energy storage unit 123, or one first drive unit 122 can correspond to multiple energy storage capacitors in one first energy storage unit 123. Alternatively, one energy storage capacitor cell in a first energy storage unit 123 can correspond to multiple drive channels in one first drive unit 122, or an energy storage capacitor in a first energy storage unit 123 can correspond to different first drive units 122. The present application does not impose specific limitations on this.

In summary, the first drive unit 122 in the present application is not limited to corresponding to the first light-emitting areas of multiple first emission units 121 in one emission subgroup. It can also be that one first drive unit 122 corresponds to the first light-emitting areas of multiple first emission units 121 in two or even more emission subgroups. That is, the first drive unit 122 only needs to be connected to at least two first emission units 121, including but not limited to being connected to one or more first light-emitting areas of two first emission units 121. To reduce the wiring length, each first drive unit 122 can also be configured to drive two adjacent first emission units 121 within the first subgroup 12A to emit laser light using energy stored in the first energy storage unit 123. The first emission unit 121 is also not limited to being connected to one channel of one first drive unit 122. One first emission unit 121 can also be connected to channels of two or even more first drive units 122. The first energy storage unit 123 is also not limited to one or more first light-emitting areas of one first emission unit 121. The first energy storage unit 123 can also be connected to one or more first light-emitting areas of multiple first emission units 121. The present application does not impose specific limitations on this. Thus, the number of channels of the first drive unit 122, the number of first light-emitting areas in the first emission unit 121, the number of first energy storage units 123, and the connection settings between the first emission unit 121, the first drive unit 122, and the first energy storage unit 123 are highly flexible and widely applicable. Light-emitting areas can also be divided according to different positions.

Each second emission unit 124 comprises at least one second light-emitting area. Taking that each second emission unit 124 has one second light-emitting area as an example, as shown in FIG. 5, the second subgroup 12B can be formed to have three emission subgroups arranged sequentially along the first direction AA, namely a fourth emission subgroup 12Ba, a fifth emission subgroup 12Bb, and a sixth emission subgroup 12Bc. Each of the fourth emission subgroup 12Ba, the fifth emission subgroup 12Bb, and the sixth emission subgroup 12Bc corresponds to one second drive unit 125, one second energy storage unit 126, and two second emission units 124, wherein each second emission unit 124 corresponds to one second light-emitting area. In this example, the fourth emission subgroup 12Ba, the fifth emission subgroup 12Bb, and the sixth emission subgroup 12Bc do not interfere with each other. When the two second light-emitting areas in the fourth emission subgroup 12Ba need to emit laser light, the second drive unit 125 within the fourth emission subgroup 12Ba drives the corresponding two second emission units 124 in that subgroup to emit laser light using energy stored in the second energy storage unit 126, causing the two second light-emitting areas corresponding to the two second emission units 124 to emit laser light. The same principle applies when the fifth emission subgroup 12Bb or the sixth emission subgroup 12Bc needs to emit laser light. Moreover, the second drive unit 125 and the second energy storage unit 126 in the fourth emission subgroup 12Ba, the fifth emission subgroup 12Bb, and the sixth emission subgroup 12Bc of the present application can be independently driven and store energy to achieve parallel emission of the fourth emission subgroup 12Ba, the fifth emission subgroup 12Bb, and the sixth emission subgroup 12Bc.

In this example, the number of channels of the second drive unit 125 can be set correspondingly according to the number of second light-emitting areas in the second emission unit 124. For example, when each second emission unit 124 is provided with only one second light-emitting area, the number of channels of the second drive unit 125 is set as shown in FIG. 6. In this case, the second drive unit 125 is provided with two corresponding channels. One of the channels is correspondingly connected to one of the two second emission units 124 in an emission subgroup (i.e., connected to the second light-emitting area corresponding to the second emission unit 124), and the remaining channel is correspondingly connected to the other one of the two second emission units 124 in that emission subgroup, so that the second drive unit 125 can drive the corresponding two second emission units 124 in that emission subgroup to emit laser light using energy stored in the second energy storage unit 126, thereby causing the two second light-emitting areas corresponding to the two second emission units 124 to emit laser light.

For another example, when each second emission unit 124 is provided with only two second light-emitting areas, the number of channels of the second drive unit 125 is set as shown in FIG. 7. In this case, the second drive unit 125 is provided with four corresponding channels. Two of the channels are connected to one of the two second emission units 124 in an emission subgroup, and the remaining two channels are connected to the other one of the two second emission units 124 in that emission subgroup, so that the second drive unit 125 can drive the corresponding two second emission units 124 in that subgroup to emit laser light using energy stored in the second energy storage unit 126, thereby causing the four second light-emitting areas corresponding to the two second emission units 124 to emit laser light.

When a second emission unit 124 is provided with multiple second light-emitting areas, the same second emission unit 124 can also correspond to different emission subgroups. That is, a second emission unit 124 can span two or even more emission subgroups. In this case, each second emission unit 124 can be connected to at least two second drive units 125. When a second emission unit 124 is provided with multiple second light-emitting areas, a part of the second light-emitting areas can be assigned to the Nth emission subgroup and connected to the second drive unit 125 within the Nth emission subgroup, and another part of the second light-emitting areas can be assigned to the (N-1)th emission subgroup and connected to the second drive unit 125 within the (N-1)th emission subgroup. Exemplarily, please refer to FIG. 8 and FIG. 9. When a second emission unit 124 is provided with three second light-emitting areas, each second drive unit 125 can be provided with four channels. Two of the second light-emitting areas are connected to two of the channels in the second drive unit 125 of the Nth emission subgroup, and the remaining one second light-emitting area is connected to one of the channels in the second drive unit 125 of the (N-1)th emission subgroup. The remaining two channels in the second drive unit 125 of the Nth emission subgroup are connected to two second light-emitting areas of another second emission unit 124. The remaining three channels in the second drive unit 125 of the (N-1)th emission subgroup are connected to three second light-emitting areas of other second emission units 124. The same principle applies when a second emission unit 124 is provided with more second light-emitting areas.

The second emission unit 124 provided by the present application can be provided with at least one second light-emitting area. That is, the second emission unit 124 can be a discrete device composed of one second light-emitting area, or it can be an integrated device composed of multiple second light-emitting areas with a common cathode or a common anode. When the second emission unit 124 is an integrated device composed of multiple second light-emitting areas with a common cathode or a common anode, the connection points of the second drive unit 125 and the second energy storage unit 126 are respectively electrically connected to the corresponding non-shared anode or cathode in the corresponding second emission unit 124.

It is worth noting that each light-emitting area needs to have its own independent energy storage unit to ensure the independence and stability of the energy capacity of each light-emitting area. That is, the number of second energy storage units 126 needs to correspond to the number of light-emitting areas. The present application can set a plurality of second energy storage units 126. Each second energy storage unit 126 can be a discrete energy storage capacitor or an integrated device provided with multiple energy storage capacitors. The number of second energy storage units 126 set in the present application or the number of energy storage capacitors in the second energy storage unit 126 can be set according to actual needs. For example, when an emission subgroup is provided with two second emission units 124, and each second emission unit 124 is provided with one second light-emitting area, each second light-emitting area corresponds to one energy storage unit in the second energy storage unit 126, so that each light-emitting area corresponds to an independent energy storage capacitor, avoiding the problem of light leakage that may occur when multiple light-emitting areas use the same energy storage capacitor due to mutual influence. When the number of energy storage capacitors in the second energy storage unit 126 is set to correspond to the number of light-emitting areas, parallel emission of each light-emitting area (i.e., independence of multi-channel concurrent emission) can be achieved, while ensuring consistent emission capability of the corresponding light-emitting areas and reducing light leakage. The second energy storage unit 126 can also correspond to the different second emission units 124 corresponding to the light-emitting areas. That is, when a second emission unit 124 spans two emission subgroups, the energy storage capacitors in the second energy storage unit 126 can correspond to the two second emission units 124 located in the same emission subgroup, for example, corresponding to one or more second light-emitting areas of one of the two second emission units 124 located in the same emission subgroup. Secondly, in the present application, one channel of a second drive unit 125 can correspond to one energy storage unit in a second energy storage unit 126, or one second drive unit 125 can correspond to multiple energy storage capacitors in one second energy storage unit 126. Alternatively, one energy storage unit in a second energy storage unit 126 can correspond to multiple drive devices in one second drive unit 125, or an energy storage capacitor in a second energy storage unit 126 can correspond to different second drive units 125. The present application does not impose specific limitations on this.

In summary, the second drive unit 125 in the present application is not limited to corresponding to the second light-emitting areas of multiple second emission units 124 in one emission subgroup. It can also be that one second drive unit 125 corresponds to the second light-emitting areas of multiple second emission units 124 in two or even more emission subgroups. That is, the second drive unit 125 only needs to be connected to at least two second emission units 124, including but not limited to being connected to one or more second light-emitting areas of two second emission units 124. To reduce the wiring length, each second drive unit 125 can also be configured to drive two adjacent second emission units 124 within the second subgroup 12B to emit laser light using energy stored in the second energy storage unit 126. The second emission unit 124 is also not limited to being connected to one channel of one second drive unit 125. One second emission unit 124 can also be connected to channels of two or even more second drive units 125. The second energy storage unit 126 is also not limited to one or more second light-emitting areas of one second emission unit 124. The second energy storage unit 126 can also be connected to one or more second light-emitting areas of multiple second emission units 124. The present application does not impose specific limitations on this. Thus, the number of channels of the second drive unit 125, the number of second light-emitting areas in the second emission unit 124, the number of second energy storage units 126, and the connection settings between the second emission unit 124, the second drive unit 125, and the second energy storage unit 126 are highly flexible and widely applicable.

In this example, each first emission unit 121 and second emission unit 124 is also provided with corresponding electrical connection points. Different first light-emitting areas within a first emission unit 121 are connected to the first energy storage unit 123 and the first drive unit 122 via corresponding electrical connection points. Different second light-emitting areas within a second emission unit 124 are connected to the second energy storage unit 126 and the second drive unit 125 via corresponding electrical connection points.

Optionally, the electrical connection points of the first emission units 121 and the second emission units 124 can be disposed on the same side. That is, the electrical connection points of the first emission units 121 and the second emission units 124 can all be disposed on the left side along the second direction BB. Correspondingly, the first energy storage unit 123, the first drive unit 122, the second energy storage unit 126, and the second drive unit 125 are all disposed within the first subgroup 12A. Alternatively, the electrical connection points of the first emission units 121 and the second emission units 124 can all be disposed on the right side along the second direction BB. Correspondingly, the first energy storage unit 123, the first drive unit 122, the second energy storage unit 126, and the second drive unit 125 are all disposed within the second subgroup 12B. Alternatively, the electrical connection points of the first emission units 121 and the second emission units 124 can all be disposed on the lower side or the upper side along the first direction AA. The wiring length also needs to be set according to the positions of the electrical connection points and the corresponding energy storage units and drive units. The electrical connection points of the first emission units 121 and the second emission units 124 can also be disposed in the middle. In this case, the first energy storage unit 123 and the second energy storage unit 126 are disposed on the back sides of the first emission units 121 and the second emission units 124, respectively. The first drive unit 122 and the second drive unit 125 are disposed on the left side of the first emission units 121 and the right side of the second emission units 124, respectively, along the second direction BB.

Preferably, to ensure the emission uniformity of the emission module 1, the electrical connection points of the first emission units 121 are disposed on the left side along the second direction BB, and the electrical connection points of the second emission units 124 are disposed on the right side along the second direction BB. In this case, it can be understood that the electrical connection points of the first emission units 121 and the second emission units 124 are disposed on opposite sides to be correspondingly connected to the first drive unit 122 and the second drive unit 125 located on the two sides, respectively. Thus, the wiring length is short, and the distance consistency of the electrical connections on both sides can be ensured, thereby ensuring the emission uniformity of the first emission units 121 and the second emission units 124 and improving the overall emission uniformity of the emission module 1. The specific positions of the electrical connection points of the first emission units 121 and the second emission units 124 can be set correspondingly according to actual needs, and the present application does not impose specific limitations on this.

Optionally, the first emission unit 121 and the second emission unit 124 can be vertical-cavity surface-emitting lasers (VCSELs), edge-emitting lasers (EELs), light-emitting diodes (LEDs), micro light-emitting diodes (Micro LEDs), pulsed laser deposition (PLD) devices, or laser diodes (LDs).

In one example, please refer to FIG. 4 and FIG. 5. The first drive unit 122, the first energy storage unit 123, the first emission units 121, the second emission units 124, the second energy storage unit 126, and the second drive unit 125 are arranged sequentially along the second direction BB on the same side of the carrier board 11. Thus, a flat layout of the first drive unit 122, the first energy storage unit 123, the first emission units 121, the second emission units 124, the second energy storage unit 126, and the second drive unit 125 can be achieved through one process step, and the manufacturing process is simple.

Optionally, the first drive unit 122, the first energy storage unit 123, the first emission units 121, the second emission units 124, the second energy storage unit 126, and the second drive unit 125 can be mounted on the carrier board 11 using surface-mount technology (SMT). Compared with traditional through-hole insertion technology, SMT can significantly reduce the space occupied by the light-emitting module 12 on the carrier board 11, thereby achieving higher assembly density. Secondly, components made using SMT technology are small in volume and have short leads, enabling the shortest current path, resulting in low parasitic inductance and capacitance, which helps reduce noise and interference in signal transmission, ensuring consistent emission capability and the highest emission efficiency for each light-emitting area.

Optionally, the first drive unit 122, the first energy storage unit 123, the first emission units 121, the second emission units 124, the second energy storage unit 126, and the second drive unit 125 can also be mounted on the carrier board 11 using packaging technology. Other mounting techniques can also be used, and the specific mounting technique can be selected according to the process of different carrier boards 11 (e.g., ceramic boards, substrates, and printed circuit boards). The present application does not impose specific limitations on this.

To further reduce the area occupied by the light-emitting module 12 on the carrier board 11, in one example, as shown in FIG. 10, the first drive unit 122, the first emission units 121, the second emission units 124, and the second drive unit 125 are arranged sequentially along the second direction BB on the same side of the carrier board 11. The first energy storage unit 123 is embedded inside the carrier board 11 opposite to the first drive unit 122, and the second energy storage unit 126 is embedded inside the carrier board 11 opposite to the second drive unit 125. In this example, embedding the first energy storage unit 123 and the second energy storage unit 126 inside the carrier board 11 does not occupy the surface area of the carrier board 11. While achieving energy storage, it further reduces the area occupied by the light-emitting module 12 on the carrier board 11, thereby further compressing the volume of the emission module 1.

In one example, as shown in FIG. 11, the carrier board 11 comprises a first surface 11A and a second surface 11B opposite to each other. The first drive unit 122, the first emission units 121, the second emission units 124, and the second drive unit 125 are arranged sequentially along the second direction BB on the first surface 11A of the carrier board 11. The first energy storage unit 123 is disposed on the second surface 11B of the carrier board 11 opposite to the first drive unit 122, and the second energy storage unit 126 is disposed on the second surface 11B of the carrier board 11 opposite to the second drive unit 125. In this example, the first energy storage unit 123 completely overlaps the orthographic projection of the first drive unit 122, and the second energy storage unit 126 completely overlaps the orthographic projection of the second drive unit 125. The first drive unit 122, the first emission units 121, the second emission units 124, and the second drive unit 125 are disposed on the first surface 11A of the carrier board 11, and the first energy storage unit 123 and the second energy storage unit 126 are disposed on the second surface 11B of the carrier board 11. This further reduces the area occupied by the light-emitting module 12 on the carrier board 11, thereby further compressing the volume of the emission module 1. Moreover, compared to embedding, disposing the first energy storage unit 123 and the second energy storage unit 126 on the second surface 11B of the carrier board 11 facilitates maintenance.

In one example, as shown in FIG. 12, the carrier board 11 comprises a first surface 11A and a second surface 11B opposite to each other. The first drive unit 122, the first emission units 121, the second emission units 124, and the second drive unit 125 are arranged sequentially along the second direction BB on the first surface 11A of the carrier board 11. The first energy storage unit 123 is disposed on the second surface 11B of the carrier board 11 and at least partially overlaps with an orthographic projection of the first drive unit 122, and the second energy storage unit 126 is disposed on the second surface 11B of the carrier board 11 and at least partially overlaps with an orthographic projection of the second drive unit 125. In this example, the first energy storage unit 123 partially overlaps the orthographic projection of the first drive unit 122, and the second energy storage unit 126 partially overlaps the orthographic projection of the second drive unit 125. The first drive unit 122, the first emission units 121, the second emission units 124, and the second drive unit 125 are disposed on the first surface 11A of the carrier board 11, and the first energy storage unit 123 and the second energy storage unit 126 are disposed on the second surface 11B of the carrier board 11. This further reduces the area occupied by the light-emitting module 12 on the carrier board 11, thereby further compressing the volume of the emission module 1.

In one example, the first emission unit 121, the first drive unit 122, and the first energy storage unit 123 can be disposed on the carrier board 11 in a 3D stacking manner. It is worth noting that in this case, the first emission unit 121, the first drive unit 122, and the first energy storage unit 123 are stacked in 3D beneath the light-emitting areas (i.e., on the side opposite to the emission direction). Similarly, the second emission unit 124, the second drive unit 125, and the second energy storage unit 126 can also be disposed on the carrier board 11 in a 3D stacking manner. Thus, using a 3D stacking method allows the light-emitting module 12 provided by the present application to occupy less area on the carrier board 11, greatly compressing the volume of the emission module 1, which is more conducive to the compression of the overall radar size and the development of miniaturization.

In summary, both the first subgroup 12A and the second subgroup 12B of the present application integrate the energy conversion step and the emission step. Compared with the related technologies using separate emission and energy conversion devices, the present application reduces the volume of the light-emitting module 12. Moreover, the first drive unit 122 and the second drive unit 125 of the present application can be understood as each integrating multiple drive devices, so as to drive at least two first emission units 121 to emit laser light through one integrated first drive unit 122, and to drive at least two second emission units 124 to emit laser light through one integrated second drive unit 125. That is, the present application can simultaneously drive at least two emission units to emit laser light through one drive unit, thereby further compressing the volume of the light-emitting module 12, making the emission module 1 conducive to the compression of the overall radar size and the development of miniaturization. Compressing the volume of the light-emitting module 12 can make the entire LiDAR 10 more compact, meaning more emission units (i.e., the first emission units 121 and the second emission units 124) can be accommodated in the same space. This allows more measurement points to be generated in the same scanning area, enabling the LiDAR 10 system to emit more laser pulses in the same time period, thereby increasing the point cloud density and emission capability density of the LiDAR 10, ensuring the vertical resolution of the LiDAR 10, and providing possibilities for high-density, long-distance ranging. Secondly, compared with a multi-row, multi-column emission matrix in related technologies, the first emission units 121 within the first subgroup 12A and the second emission units 124 within the second subgroup 12B of the present application are arranged in a staggered manner along the second direction BB, occupying a smaller space on the carrier board 11, thereby further compressing the volume of the light-emitting module 12. Moreover, the staggered arrangement of the first emission units 121 and the second emission units 124 along the second direction BB can better utilize the limited space, making the entire system more compact while maintaining sufficient spacing. Secondly, staggering the first emission units 121 and the second emission units 124 also allows sufficient space around each emission unit for heat dissipation, thereby reducing heat conduction between adjacent emission units and avoiding local overheating.

An embodiment of the present application further provides a LiDAR 10, comprising the emission module 1 according to any of the optional implementations described above and a reception module 2. Since the LiDAR 10 comprises the emission module 1, it has all the beneficial effects of the emission module 1 described in any of the above embodiments, which are not repeated here.

An embodiment of the present application further provides an electronic device, comprising the LiDAR 10 according to any of the optional implementations described above and a housing. The LiDAR 10 is mounted on the housing. Since the electronic device comprises the LiDAR 10, it has all the beneficial effects of the LiDAR 10, which are not repeated here.

The technical features of the above embodiments can be combined arbitrarily. For the sake of brevity, not all possible combinations of the technical features in the above embodiments are described. However, as long as there is no contradiction in the combination of these technical features, they should be considered as within the scope of this description.

The above embodiments only represent several implementation manners of the present application, and their descriptions are specific and detailed, but should not be construed as limiting the scope of the patent application. It should be pointed out that, for those of ordinary skill in the art, several modifications and improvements can be made without departing from the concept of the present application, and these all fall within the protection scope of the present application. Therefore, the protection scope of the patent of the present application shall be subject to the appended claims.

## Claims

1. An emission module, **characterized in that** said emission module comprises a carrier board and a light-emitting module, said light-emitting module comprises:
a first subgroup, comprising at least two first emission units, at least one first drive unit, and at least one first energy storage unit, wherein said at least two first emission units are arranged sequentially on said carrier board along a first direction, and said first drive unit is configured to drive said at least two first emission units of said first subgroup to emit laser light using energy stored in said at least one first energy storage unit; and
a second subgroup, comprising at least two second emission units, at least one second drive unit, and at least one second energy storage unit, wherein said at least two second emission units are arranged sequentially on said carrier board along said first direction, and said second drive unit is configured to drive said at least two second emission units of said second subgroup to emit laser light using energy stored in said at least one second energy storage unit,
wherein said first emission units and said second emission units are arranged in a staggered manner along a second direction, said second direction intersecting with said first direction.

2. The emission module according to claim 1, wherein, each first emission unit comprises at least one first light-emitting area; each second emission unit comprises at least one second light-emitting area.

3. The emission module according to claim 1, wherein, said first drive unit, said first energy storage unit, said first emission units, said second emission units, said second energy storage unit, and said second drive unit are arranged sequentially along said second direction on a same side of said carrier board.

4. The emission module according to claim 3, wherein, said first drive unit, said first energy storage unit, said first emission units, said second emission units, said second energy storage unit, and said second drive unit are mounted on said carrier board using surface-mount technology.

5. The emission module according to claim 1, wherein, said first drive unit, said first emission units, said second emission units, and said second drive unit are arranged sequentially along said second direction on a same side of said carrier board; said first energy storage unit is embedded inside said carrier board opposite to said first drive unit, and said second energy storage unit is embedded inside said carrier board opposite to said second drive unit.

6. The emission module according to claim 1, wherein, said carrier board comprises a first surface and a second surface opposite to each other;
said first drive unit, said first emission units, said second emission units, and said second drive unit are arranged sequentially along said second direction on the first surface of said carrier board; said first energy storage unit is disposed on the second surface of said carrier board opposite to said first drive unit, and said second energy storage unit is disposed on the second surface of said carrier board opposite to said second drive unit.

7. The emission module according to claim 1, wherein, said carrier board comprises a first surface and a second surface opposite to each other;
said first drive unit, said first emission units, said second emission units, and said second drive unit are arranged sequentially along said second direction on the first surface of said carrier board; said first energy storage unit is disposed on the second surface of said carrier board and at least partially overlaps with an orthographic projection of said first drive unit, and said second energy storage unit is disposed on the second surface of said carrier board and at least partially overlaps with an orthographic projection of said second drive unit.

8. The emission module according to any one of claims 1 to 7, wherein:
each first emission unit is connected to at least two said first drive units;
and/or
each second emission unit is connected to at least two said second drive units.

9. The emission module according to any one of claims 1 to 7, wherein:
each first drive unit is configured to drive two adjacent said first emission units within said first subgroup to emit laser light using energy stored in said first energy storage unit;
and/or
each second drive unit is configured to drive two adjacent said second emission units within said second subgroup to emit laser light using energy stored in said second energy storage unit.

10. A LiDAR, comprising:
the emission module according to any one of claims 1-9, said emission module configured to emit laser light; and
a reception module, configured to receive echo signals corresponding to said laser light.
